# DEMANDE DE BREVET EUROPEEN

(11) **EP 1 158 755 A2**
(43) Date de publication de la demande: **28.11.2001**
(21) Numéro de dépôt: 01401075.5
(22) Date de dépôt: 26.04.2001
(51) Int. Cl.: H04M 7/00, H04L 29/06

(54) **Procédé pour un serveur de connexion internet qui permet d'établir des artères de signalisation pour un réseau privé de télécommunication**

(30) Priorité: 15.05.2000 FR 0006139
(71) Demandeur: ALCATEL, 75008 Paris (FR)
(72) Inventeur: Litteaut, Jacques, 78160 Marly Le Roi (FR); Villatte, Karine, 92250 La Garenne Colombes (FR)
(74) Mandataire: Sciaux, Edmond

(57) **Abrégé**

L'invention concerne un procédé permettant d'établir des artères de signalisation pour un réseau privé de télécommunication, ce réseau privé, comprenant au moins deux autocommutateurs (1-8) et au moins une artère de signalisation (25, ..., 32) entre deux des autocommutateurs. II consiste à :
- rendre accessible, sur un serveur (16) relié à Internet, les adresses Internet des autocommutateurs (1-8) appartenant à ce réseau privé ;
- transmettre de ce serveur aux autocommutateurs (1-8) ces adresses Internet, à la demande de ces autocommutateurs ;
- puis établir. des artères de signalisation (25, ..., 32) entre ces autocommutateurs (1-8) en utilisant ces adresses Internet pour échanger des messages de signalisation.

L'invention permet d'alléger le coût des équipements et de l'exploitation d'un réseau privé de télécommunication.

## Description

L'invention concerne les réseaux privés de télécommunication, et plus spécifiquement les réseaux privés comportant une pluralité d'autocommutateurs interconnectés par le réseau public pour le transport de la voix. Un tel réseau privé comporte en outre des artères spécialisées pour la signalisation, utilisées lors de l'établissement des communications vocales entre les autocommutateurs.

Il est connu de constituer ces artères de signalisation par des canaux permanents de transmission de données (Canaux dits D) du réseau numérique à intégration de services, ou bien par liaisons permanentes d'un réseau de transmission de données. Ces canaux ou liaisons de transmission de données sont louées à un prix non négligeables, et nécessitent des équipements spécifiques, respectivement : un coupleur pour réseau à intégration de services ; ou un adaptateur synchrone, plus éventuellement un modem, pour un réseau de transmission de données, selon le type de liaison.

L'invention propose une solution à ces problèmes. Elle permet de réduire les coûts d'installation et d'entretien d'un réseau privé ; elle économise les équipements, et permet facilement d'établir un réseau mondial.

Plus précisément, l'objet de l'invention est un procédé permettant d'établir des d'artères de signalisation pour un réseau privé de télécommunication, ce réseau privé, comprenant au moins deux autocommutateurs et au moins une artère de signalisation entre deux des autocommutateurs ; **caractérisé** en ce qu'il consiste à :
- rendre accessible, sur un serveur relié à Internet, les adresses Internet des autocommutateurs appartenant à ce réseau privé ;
- transmettre de ce serveur aux autocommutateurs ces adresses Internet, à la demande de ces autocommutateurs ;
- puis établir des artères de signalisation entre ces autocommutateurs en utilisant ces adresses Internet pour échanger des messages de signalisation.

L'invention a aussi pour objet un serveur de connexion Internet permettant d'établir des d'artères de signalisation pour un réseau privé de télécommunication, ce réseau privé, comprenant au moins deux autocommutateurs et au moins une artère de signalisation entre deux des autocommutateurs ; **caractérisé** en ce qu'il comporte :
- des moyens pour recevoir, via Internet, une requête émise par un premier commutateur et désignant au moins un second autocommutateur, en vue d'établir une artère de signalisation entre ce premier et ce second autocommutateur ;
- et des moyens pour envoyer, via Internet, à ce premier autocommutateur, l'adresse Internet du second autocommutateur.

Le serveur ainsi caractérisé permet d'établir des artères de signalisation pour un faible coût car l'utilisation du réseau Internet est gratuite, dés lors que les autocommutateurs ont accès à Internet. D'autre part, pour qu'un autocommutateur ait un accès à Internet, il suffit de rajouter du logiciel dans cet autocommutateur, et d'utiliser la passerelle Internet d'un réseau local d'entreprise ; ou bien, en l'absence d'une telle passerelle, de relier cet autocommutateur à un commutateur local du réseau téléphonique publique par un modem classique, ou par un adaptateur pour réseau numérique à intégration de services, ces deux dispositifs étant classiques et peu coûteux.

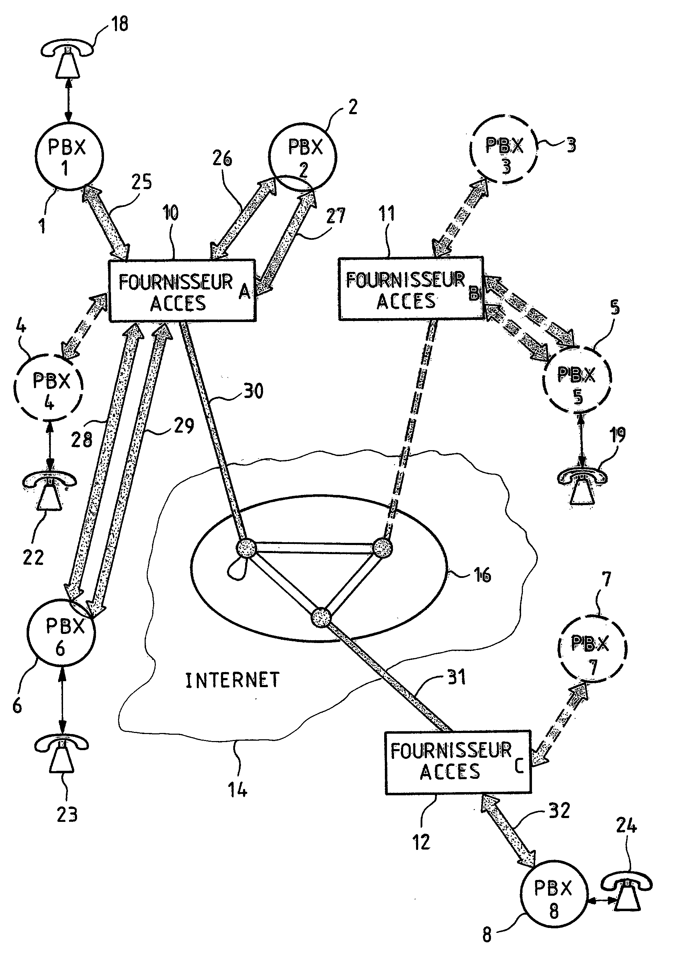

D'autres caractéristiques et avantages de l'invention apparaîtront à la lecture de la description d'un exemple de réalisation, en référence à la figure unique annexée.

La figure montre une représentation schématique de deux réseaux privés utilisant un même serveur de connexion Internet, 16, selon l'invention. On a représenté sur cette figure un ensemble d'autocommutateurs privés 1 à 8, qui sont appelés respectivement PBX1, ..., PBX8. Les autocommutateurs 1, 2, 6, 8 appartiennent à un premier réseau privé qui est représenté en traits pleins. Les autocommutateurs 3, 4, 5, 7 appartiennent à un second réseau privé qui est représenté en traits discontinus.

Dans cet exemple, les autocommutateurs sont reliés au réseau Internet par des fournisseurs d'accès, qui sont référencés 10, 11 et 12. Le réseau Internet est symbolisé sur la figure par la référence 14. Les autocommutateurs 1, 2, 4 et 6 accèdent au réseau Internet 14 par l'intermédiaire du fournisseur d'accès référencé 10. Les autocommutateurs 3 et 5 accèdent au réseau Internet 14 par l'intermédiaire du fournisseur d'accès référencé 11. Les autocommutateurs 7 et 8 accèdent au réseau Internet 14 par l'intermédiaire du fournisseur d'accès référencé 12. Ces autocommutateurs 1 à 8 sont munis d'un modem classique ou d'un adaptateur pour réseau numérique à intégration de services, relié à un commutateur local du réseau téléphonique public. Une artère de signalisation coûte donc le prix d'une communication locale pour chaque commutateur, si un modem classique est utilisé. Elle coûte le prix de location d'un canal D, plus une taxe fonction du volume des données de signalisation transmises, si un adaptateur pour réseau numérique à intégration de services est utilisé. Dans tous les cas, le coût d'exploitation est réduit.

Dans d'autres exemples de réalisation, un autocommutateur peut accéder à Internet par un accès permanent procuré par la passerelle Internet d'un réseau local d'entreprise.

Le serveur de connexion Internet, 16, permet d'établir dans le réseau Internet 14, des artères spécialisées de signalisation, indépendamment pour les deux réseaux privés. A titre d'exemple, considérons les artères de signalisation du premier réseau. Pour transmettre des messages de signalisation à travers tout le premier réseau, des artères de signalisation 25 à 32 sont reliées en série d'un autocommutateur à un autre, à travers Internet, dans l'ordre 1-2-6-8 par exemple, quel que soit le chemin suivi par les liaisons vocales (dans le réseau téléphonique public) pour relier les autocommutateurs 1 à 8.

Une artère 25 relie l'autocommutateur 1 au fournisseur de service 10. Une artère 26 relie le fournisseur de service 10 à l'autocommutateur 2. Une autre artère 27 relie l'autocommutateur 2 au fournisseur de service 10. Une artère 28 relie le fournisseur de service 10 à I' autocommutateur 6. Une autre artère 29 relie l'autocommutateurs 6 au fournisseur de service 10. Une artère 30 relie le fournisseur de service 10 au réseau Internet 16. Une artère 31 relie le réseau Internet 16 au fournisseur de service 12. Une artère 32 relie le fournisseur de service 12 à I' autocommutateur 8.

Le serveur 16 permet de constituer un réseau privé, en établissant des connexions Internet constituant des artères spécialisée pour la signalisation, entre des autocommutateurs 1, 2, 6, 8 qui ne sont reliés ni par un réseau téléphonique public, ni par un réseau privé, en ce qui concerne la signalisation.

Supposons par exemple que l'autocommutateur 8 démarre le premier, puis les autocommutateurs 6, puis, 2, puis 1.

L'autocommutateur 8 appelle le fournisseur d'accès 12 pour se faire attribuer dynamiquement une adresse Internet. Il peut ensuite établir une connexion avec le serveur 16, puis envoyer au serveur 16, une trame Internet contenant :
- l'adresse Internet de cet autocommutateur 8,
- l'identité du réseau auquel il appartient (premier réseau),
- son identité d'autocommutateur (PBX8),
- et une requête demandant l'établissement d'une artère de signalisation entre le fournisseur d'accès 12 et I' autocommutateurs 6 qui est le plus proche dans la série d'autocommutateurs 1-2-6-8 constituant le premier réseau.

Sur la base de l'identité de l'autocommutateur 8 et de son mot de passe, le serveur 16 vérifie que l'autocommutateur 8 a le droit d'établir une artère de signalisation (constituée des segments 28 à 32) pour se relier à l'autocommutateur 6. Il communique ensuite à l'autocommutateur 8 l'adresse IP de l'autocommutateur 6.

Tant que l'autocommutateur 6 n'a pas démarré, l'autocommutateur 8 attend. Quand l'autocommutateur 6 démarre, il appelle le fournisseur d'accès 10 pour se faire attribuer dynamiquement une adresse Internet. Il peut alors établir une connexion avec le serveur 16, puis envoyer au serveur 16, une trame Internet contenant :
- l'adresse Internet de cet autocommutateur 6,
- l'identité du réseau auquel il appartient (premier réseau),
- son identité d'autocommutateur (PBX6),
- et une requête demandant l'établissement :
   -- d'une artère de signalisation (constituée des segments 29-31) via le fournisseur d'accès 10, le fournisseur d'accès 12, et via le réseau Internet 16 ;
   -- et d'une artère de signalisation (constituée des segments 27-28) entre l'autocommutateur 6 et l'autocommutateur 2, via le fournisseur d'accès 10, sachant que I' autocommutateur 2 et l'autocommutateur 8 sont les plus proches de lui dans la série d'autocommutateurs 1-2-6-8 constituant le premier réseau.

Sur la base de l'identité de l'autocommutateur 6 et de son mot de passe, le serveur 16 vérifie que l'autocommutateur 6 a le droit d'établir l'artère de signalisation 27-28 pour se relier à l'autocommutateur 2 ; et l'artère de signalisation 30-31 pour se relier à l'autocommutateur 8. Il communique ensuite à l'autocommutateur 6 les adresses IP des autocommutateurs 2 et 8.

L'autocommutateur 6 est alors en mesure d'échanger des messages de signalisation avec l'autocommutateur 2, mais celui-ci n'a pas encore démarré. Par contre, l'autocommutateur 8 a déjà démarré. Les autocommutateurs 6 et 8 établissent une couche liaison (utilisant le protocole UDP) en échangeant des adresses de port. L'artère de signalisation 29-32 est donc établie. Ils sont alors en mesure d'échanger des messages de signalisation en utilisant leurs adresses Internet et leurs adresses de port respectives. Ils échangent ainsi des informations sur la topologie actuelle du premier réseau privé. L'autocommutateur 8 peut signaler, par exemple, qu'un autocommutateur (non représenté) est relié à cet autocommutateur 8 par une liaison de signalisation privée (non représentée).

Si un usager demande l'établissement d'une communication téléphonique depuis son terminal 23, relié à l'autocommutateur 6, jusqu'à un autre terminal 24 relié à l'autocommutateur 8, les autocommutateurs 6 et 8 échangent des messages de signalisation classiques de demande d'établissement d'appel, en utilisant leurs adresses IP respectives, et leurs numéros de port respectifs, constituant ainsi une artère de signalisation 29, 30, 31, 32. La communication vocale est établie de manière classique sur une liaison vocale (non représentées) du réseau téléphonique publique classique, entre les autocommutateurs 6 et 8.

Quand l'autocommutateur 2 démarre, il appelle le fournisseur d'accès 10 pour se faire attribuer dynamiquement une adresse Internet. Il peut alors établir une connexion avec le serveur 16, puis envoyer au serveur 16, une trame Internet contenant :
- l'adresse Internet de cet autocommutateur 2,
- l'identité du réseau auquel il appartient (premier réseau),
- son identité d'autocommutateur (PBX2),
- et une requête demandant l'établissement :
   -- d'une artère de signalisation (constituée des segments 25-26) entre les autocommutateurs 1 et 2 via le fournisseur d'accès 10 ;
   -- et d'une artère de signalisation (constituée des segments 27-28) entre les autocommutateur 2 et 6, via le fournisseur d'accès 10, sachant que l'autocommutateurs 1 et l'autocommutateur 6 sont les plus proches de lui dans la série d'autocommutateurs 1-2-6-8 constituant le premier réseau.

Sur la base de l'identité de l'autocommutateur 2 et de son mot de passe, le serveur 16 vérifie que l'autocommutateur 2 a le droit d'établir l'artère de signalisation 27-28 pour se relier à l'autocommutateur 6 ; et l'artère de signalisation 25-26 pour se relier à l'autocommutateur 1. Il communique alors à l'autocommutateur 2 les adresses IP des autocommutateurs 1 et 6.

L'autocommutateur 2 est alors en mesure d'échanger des messages de signalisation avec l'autocommutateur 1 mais celui-ci n'a pas encore démarré. Par contre, l'autocommutateur 6 a déjà démarré. Les autocommutateurs 2 et 6 établissent une couche liaison (utilisant le protocole UDP) en échangeant des adresses de port. Ils sont alors en mesure d'échanger des messages de signalisation en utilisant leurs adresses Internet et leurs adresses de port respectives. Ils échangent ainsi des informations sur la topologie actuelle du premier réseau privé. En particulier, l'autocommutateur 6 lui communique l'adresse IP de l'autocommutateur 8.

Puis les autocommutateurs 2 et 8 établissent une couche liaison (utilisant le protocole UDP) en échangeant des adresses de port. Ils sont alors en mesure d'échanger des messages de signalisation en utilisant leurs adresses Internet et leurs adresses de port respectives, sur l'artère de signalisation 27-32. Ils échangent des informations sur la topologie actuelle du premier réseau privé.

Les autocommutateurs 2, 8, et 6 peuvent ensuite échanger des messages de signalisation via Internet en utilisant leurs adresses Internet respectives, pour établir des communications vocales.

Quand l'autocommutateur 1 démarre, il appelle le fournisseur d'accès 10 pour se faire attribuer dynamiquement une adresse Internet. Il peut alors établir une connexion avec le serveur 16, puis envoyer au serveur 16, une trame Internet contenant :
- l'adresse Internet de cet autocommutateur 1,
- l'identité du réseau auquel il appartient (premier réseau),
- son identité d'autocommutateur (PBX1),
- et une requête demandant l'établissement d'une artère de signalisation 25-26 entre les autocommutateurs 1 et 2 via le fournisseur d'accès 10 , sachant que I' autocommutateurs 2 est l'autocommutateur le plus proches de lui dans la série d'autocommutateurs 1-2-6-8 constituant le premier réseau.

Sur la base de l'identité de l'autocommutateur 1 et de son mot de passe, le serveur 16 vérifie que l'autocommutateur 1 a le droit d'établir une artère de signalisation 25-26 pour se relier à l'autocommutateur 2. Il communique alors à l'autocommutateur 1 l'adresse IP de l'autocommutateur 2. Puis les autocommutateurs 1 et 2 établissent une couche liaison (utilisant le protocole UDP) en échangeant des adresses de port. Ils sont alors en mesure d'échanger des messages de signalisation en utilisant leurs adresses Internet et leurs adresses de port respectives. Ils échangent des informations sur la topologie actuelle du premier réseau privé.

Les autocommutateurs 1, 2, 8, et 6 peuvent ensuite échanger des messages de signalisation via Internet en utilisant leurs adresses Internet respectives, pour établir des communications vocales.

Par exemple, si un usager demande l'établissement d'une communication téléphonique depuis son terminal téléphonique 18, relié à l'autocommutateur 1, jusqu'à un autre terminal 24 relié à l'autocommutateur 8, les autocommutateurs 1 et 8 échangent des messages de signalisation classiques de demande d'établissement d'appel, en utilisant leurs adresses IP respectives, et leurs numéros de port respectifs, constituant ainsi une artère de signalisation 25, 26, ,27, 28, 29, 30, 31, 32. La communication vocale est établie de manière classique sur une liaison vocale (non représentées) du réseau téléphonique publique classique, entre les autocommutateurs 1 et 8.

## Revendications

1. Procédé permettant d'établir des d'artères de signalisation pour un réseau privé de télécommunication, ce réseau privé, comprenant au moins deux autocommutateurs (1-8) et au moins une artère de signalisation (25, ..., 32) entre deux des autocommutateurs ; **caractérisé en ce qu'**il consiste à :
- rendre accessible, sur un serveur (16) relié à Internet, les adresses Internet des autocommutateurs (1-8) appartenant à ce réseau privé ;
- transmettre de ce serveur aux autocommutateurs (1-8) ces adresses Internet, à la demande de ces autocommutateurs ;
- puis établir des artères de signalisation (25, ..., 32) entre ces autocommutateurs (1-8) en utilisant ces adresses Internet pour échanger des messages de signalisation.

2. Serveur de connexion Internet permettant d'établir des d'artères de signalisation pour un réseau privé de télécommunication, ce réseau privé, comprenant au moins deux autocommutateurs (1-8) et au moins une artère de signalisation (25, ..., 32) entre deux des autocommutateurs ; **caractérisé en ce qu'**il comporte :
- des moyens (16) pour recevoir, via Internet (14), une requête émise par un premier commutateur et désignant au moins un second autocommutateur, en vue d'établir une artère de signalisation entre ce premier et ce second autocommutateur ;
- et des moyens (16) pour envoyer, via Internet, à ce premier autocommutateur, l'adresse Internet du second autocommutateur.

3. Serveur selon la revendication 2, **caractérisé en ce qu'**il comporte en outre des moyens (16) pour vérifier les droit d'un premier autocommutateur lorsque cet autocommutateur lui envoie une requête désignant au moins un second autocommutateur, en vue d'établir une artère de signalisation entre ce premier et ce second autocommutateur.
